# EUROPÄISCHE PATENTSCHRIFT

(11) **EP 2 242 923 B1**
(45) Veröffentlichungstag und Bekanntmachung des Hinweises auf die Patenterteilung: **29.07.2015**
(21) Anmeldenummer: 09706561.9
(22) Anmeldetag: 10.01.2009
(51) Int. Cl.: F03B 3/04

(54) **FREISTEHENDE, TAUCHENDE WASSERTURBINE MIT EINEM AXIALROTOR**
FREE-STANDING, IMMERSIBLE POWER GENERATION PLANT WITH AN AXIAL TURBINE
INSTALLATION DE PRODUCTION D'ÉNERGIE IMMERGÉE INDÉPENDANTE MUNIE D'UNE TURBINE AXIALE

(30) Priorität: 31.01.2008 DE 102008007043
(43) Veröffentlichungstag der Anmeldung: 27.10.2010
(73) Patentinhaber: Voith Patent GmbH, 89522 Heidenheim (DE)
(72) Erfinder: BISKUP, Frank, 73527 Schwäbusch Gmünd (DE); ARLITT, Raphael, 89077 Ulm (DE); STARZMANN, Ralf, 89555 Söhnstetten (DE)
(74) Vertreter: Dr. Weitzel & Partner
(86) Internationale Anmeldenummer: PCT/EP2009/000098
(87) Internationale Veröffentlichungsnummer: WO 2009/095149

(56) Entgegenhaltungen:
- EP-A2- 1 741 926
- WO-A1-00/50768
- WO-A1-2005/090779
- DE-U1-202005 020 071
- DE-U1-202007 004 170
- FR-A- 412 148
- US-A- 1 504 737
- US-A- 4 219 303

## Beschreibung

Die Erfindung betrifft eine tauchende, freistehende Energieerzeugungsanlage mit einer Wasserturbine, die als Axialturbine mit propellerförmiger Gestalt angelegt ist.

Energieerzeugungsanlagen, die als freistehende Einheiten ohne zusätzliche Dammstrukturen Energie aus einer Gewässerströmung entnehmen, können als Flusswasserkraftwerke und insbesondere zur Gewinnung von Energie aus einer Meeresströmung, vorzugsweise einer Gezeitenströmung, Verwendung finden.

Tauchende Energieerzeugungsanlagen mit einer Stützstruktur, an der eine Wasserturbine in Form einer Axialturbine umläuft, sind bekannt. Üblicherweise umfasst die Axialturbine eine Nabe mit daran angebrachten, propellerförmigen Turbinenblättern. Eine solche Axialturbine steht in drehfester Verbindung zu einer in einem Gondelgehäuse gelagerten Antriebswelle, die üblicherweise zum Antrieb eines elektrischen Generators dient.

Für gattungsgemäß freistehende, tauchende Energieerzeugungsanlagen wird exemplarisch auf die EP 1 183 463 A1 und die EP 1 540 172 A1 verwiesen. Aus diesen Druckschriften sind propellerförmige Axialturbinen bekannt. Dabei sind die Turbinenblätter in Form von Radialstrahlrotoren entlang des Umfangs einer Nabe angeordnet, d. h. es lässt sich für jedes der Turbinenblätter wenigstens eine Auffädellinie der Profilschnitte definieren, die geradlinig verläuft und im Verhältnis zur Drehachse der Axialturbine in radiale Richtung weist. Eine solche Gestaltung der Turbinenblätter zeichnet sich durch hohe Strukturfestigkeit aus und wird daher für die im Vergleich zu einer Luftströmung hohe Dichte von Wasser als antreibendem Medium bevorzugt für tauchende Energieerzeugungsanlagen gewählt. Auch bei radial kleinbauenden Axialturbinen für tauchende Energieerzeugungsanlagen wird ein hohes Moment aufgenommen, sodass die gesamte Anlage von den Turbinenblättern bis zur Stützstruktur entsprechend der hohen statischen und dynamischen Belastungen ausgelegt werden muss.

Der Erfindung liegt die Aufgabe zugrunde, eine freistehende, tauchende Energieerzeugungsanlage anzugeben, die so gestaltet ist, dass von der Axialturbine nur begrenzte dynamische Belastungen ausgehen und die gesamte Anlage insbesondere im Hinblick auf die Strukturfestigkeit konstruktiv einfach gestaltet werden kann.

Die der Erfindung zugrunde liegende Aufgabe wird durch die Merkmale des unabhängigen Anspruchs gelöst. Vorteilhafte Ausgestaltungen vergeben sich aus den Unteransprüchen.

Für freistehende Axialturbinen, deren Drehachse in einer Winkelstellung, meist einer rechtwinkligen Stellung, zu einer Stützstruktur steht, treten Druckpulse beim Durchgang der Rotorblätter durch den Turmvorstau im Falle eines Luvläufers und durch den Turmschatten bzw. den instabilen Nachlaufbereich im Falle eines Leeläufers auf. Diese führen zu zeitlich variablen Momenten um eine Achse, die senkrecht zur Längsachse der Stützstruktur und senkrecht zur Drehachse der Axialturbine verläuft.

Zur Abmilderung dieser Problematik wird durch die Erfindung vorgeschlagen, wenigstens ein Turbinenblatt in der Rotationsebene gegen die Radialrichtung zu neigen und/oder zu krümmen. Bevorzugt entsteht dabei ein über einen weiten Teil der Erstreckung des Turbinenblatts ein vom Radius abhängiger Winkelversatz gegenüber dem durch den Fußpunkt des Rotorblatts verlaufenden Radialstrahl.

Demnach zeichnet sich die Erfindung für eine erste Ausgestaltung durch Turbinenblätter einer Axialturbine für eine tauchende Energieerzeugungsanlage aus, für die die Projektion der Auffädellinie der Profilschnitte in die Rotationsebene nicht ausschließlich in Radialrichtung weist bzw. vom Verlauf des Radialstrahls abweicht. Diese Abweichung führt wenigstens in Teilbereichen der Auffädellinie zu einem radiusabhängigen Winkelversatz gegenüber dem Radialstrahl.

Es wird die Auffädellinie der Profilschnitte zusätzlich aus der Rotationsebene herausgeführt, wobei die Turbinenblattspitze weiter von der Stützstruktur beabstandet ist als der Fußpunkt des Turbinenblatts. Dies kann gekrümmt erfolgen.

Insbesondere bei einem Luvläufer treffen so die sich an der abströmungsseitigen Kante entlang der Längserstreckung der Rotorblätter auftretenden Wirbel mir zeitlichem Abstand auf die Stützstruktur, wobei die schnell umlaufenden Rotorblattspitzen aufgrund der Krümmung der Auffädellinie besonderes weit von der Stützstruktur beabstandet sind. Dies ist insbesondere im Hinblick auf die Anlagenakustik und die notwendige Strukturfestigkeit der Anlagenkomponenten von Vorteil.

Vorliegend wird unter dem Begriff "Rotationsebene" der Axialturbine eine Ebene verstanden, zu der die Drehachse eine Flächennormale bildet und die den Fußpunkt wenigstens eines Turbinenblatts schneidet. Dabei ist der Fußpunkt als Schnitt der Auffädellinie mit der Tragstruktur des Turbinenblatts, typischerweise einer Nabe, festgelegt.

Die Auffädellinie stellt die Verbindungslinie eines definierten Punkts der Profilschnitte eines Turbinenblatts dar. Ein solchermaßen definierter Punkt kann beispielsweise der Schnittpunkt der Skelettlinie mit der Mittenlinie des Profilschnitts sein. Üblicherweise wird zur Festlegung der Auffädellinie jener Punkt auf der Skelettlinie gewählt, der bei einem Viertel der Profiltiefe liegt. Für eine Vielzahl von Profilen stellt dieser Punkt annäherungsweise den momentenfreien Kraftangriffspunkt dar. Im Rahmen der Erfindung soll für jede mögliche Festlegung der Auffädellinie die Geometriebedingung einer Abweichung vom Radialstrahlverlauf in der Rotationsebene gegeben sein.

Aufgrund der Abweichung vom üblichen radialen Verlauf für die Projektion der Auffädellinie auf die Rotationsebene durchquert jedes der Turbinenblätter den Bereich im Strömungsfeld, der durch die Stützstruktur beeinflusst ist, nicht mit der gesamten Turbinenblattlängserstreckung zur gleichen Zeit. Stattdessen wird dieser Einflußbereich für ein Turbinenblatt entsprechend seiner in den Raum greifenden Gestalt zu unterschiedlichen Zeiten durchlaufen, was pulsartig auftretende Momentenstöße verringert.

Für ein Turbinenblatt mit der erfindungsgemäßen Geometrie wird eine solche Abweichung der Projektion der Aüffädellinie in die Rotationsebene angelegt, die effektiv Druckpulse reduziert. Der Grad der Neigung und/oder Krümmung der Projektion der Auffädellinie gegen die Radiale wird von mehreren Faktoren abhängen - dies sind insbesondere die Strömungsgeschwindigkeit, die Dimension der Stützstruktur, sowie die Anzahl, Streckung und Größe der Turbinenblätter. Für eine bevorzugte Ausgestaltung wird für den Bereich der größten Vor oder Rücklage gegen den Radialstrahl eine minimale Winkelabweichung von wenigstens 10° vorliegen. Dabei wird die Winkelabweichung zwischen dem Radialstrahl und einer Geraden gemessen, die durch den zum jeweiligen Profilschnitt gehörenden Punkt auf der Auffädellinie und dem Durchstoßpunkt der Drehachse durch die Rotationseben festgelegt ist. Ferner sind Ausgestaltungen denkbar, für die eine Vor- oder Rücklage gegenüber dem Radialstrahl nur über einen Teil der Längserstreckung des Turbinenblatts vorliegt. Bevorzugt wird, die Krümmung und/oder Neigung der Auffädellinie für wenigstens ein Drittel der Längserstreckung vorzusehen, wobei der Bereich der Turbinenblattspitzen am einflussreichsten ist.

Für ein Turbinenblatt, dessen Auffädellinie der Pröfilschnitte wenigstens teilweise aus der Rotationsebene der Axialturbine herausgeführt ist, treten weiter verringerte Druckpulse auf. Dies folgt aus dem Umstand, dass der Bereich des Turmvorstaus beziehungsweise des Turmschattens über die Längserstreckung des Turbinenblatts nicht in einem übereinstimmenden axialen Abstand zur Stützstruktur durchquert wird. Besonders bevorzugt wird eine Ausgestaltung, für die die schnell umlaufende Spitze wenigstens eines Turbinenblatts in einem größeren Abstand zur Stützstruktur als das nabenseitige Ende des Turbinenblatts angeordnet ist.

Für eine erfindungsgemäße Energieerzeugungsanlage sind Druckpulsationen während des Umlaufs einer propellerförmig ausgestalteten Axialturbine verringert. Dies bringt gegenüber einer Radialstrahlgeometrie, die an sich zu strukturell steiferen Turbinenblattgestaltungen führt, den Vorteil einer höheren Laufruhe, sodass die weniger steife Geometrie gekrümmter oder geneigter Turbinenblätter in der Gesamtbetrachtung zu einem Vorteil führt. Entsprechend kann die gesamte Anlage im Hinblick auf die Strukturfestigkeit mit geringeren Anforderungen ausgelegt werden. Dies betrifft sowohl die Axialturbine selbst als auch alle nachfolgenden strukturellen Komponenten bis hin zur Stützstruktur. Durch die Verringerung der dynamischen Laster ist darüber hinaus das Ermüdungsverhalten und damit die Standzeit der Anlage verbessert.

Zusätzlich zur Neigung oder Krümmung der Auffädellinie der Turbinenblätter projiziert auf die Rotationsebene können weitere Maßnahmen ergriffen werden, die den Effekt der Strömungsbeeinflussung durch die Stützstruktur auf die Turbinenblätter verringern. Eine der Maßnahmen besteht darin, die Axialturbine möglichst weit in Richtung der Drehachse von der Stützstruktur zu beabstanden. Üblicherweise ist zwischen der Nabe der Axialturbine und der Stützstruktur ein Gondelgehäuse vorgesehen, in dem Getriebe und Generatorkomponenten untergebracht sind. Für eine besonders vorteilhafte Gestaltung wird das Gondelgehäuse axial langbauend ausgebildet und umfasst ein axiales Abstandselement. Als weitere zusätzliche Maßnahme kann die Stützstruktur wenigstens in Teilen stromlinienförmig angelegt sein. Im Falle einer Stützstruktur in Form eines Turmes bietet es sich an, den Querschnitt asymmetrisch auszubilden. Hierbei kommen insbesondere elliptische oder an beiden axialen Enden spitz zulaufende Querschnitte in Betracht.

Die erfindungsgemäße Abweichung der Auffädellinie der Profilschnitte der Turbinenblätter von einem ausschließlich radialen Verlauf führt ferner zu einer akustischen Verbesserung der tauchenden Energieerzeugungsanlage, wobei die verringerte Schallerzeugung die Fauna in der Umgebung der tauchenden Energieerzeugungsanlage weniger beeinträchtigt. Dabei werden insbesondere sichelförmig gestaltete Turbinenblätter bevorzugt.

Eine Geräuschverminderung ist mit der erfindungsgemäßen Turbinenblattgeometrie auch für eine rotationssymmetrisch angelegte Stützstruktur gegeben. Eine solche Stützstruktur kann beispielsweise für eine im Wasser schwebende und mit einem Seilsystem verankerte Bauform gegeben sein. Der stromaufwärtige Bereich wird dann im Wesentlichen symmetrisch beeinflusst, während im Nachlauf aufgrund der dort vorliegenden Instabilitäten weiterhin die voranstenhend beschriebene Problematik vorliegt. Für eine Weitergestaltung wird für eine Axialturbine mit einer Vielzahl von Turbinenblättern die Schallerzeugung durch einen von Turbinenblatt zu Turbinenblatt unterschiedlich gewählten Auffädellinienverlauf reduziert, es liegt demnach für diese Ausgestaltungsvariante in Umfangsrichtung eine Symmetriebrechung bezüglich der Turbinenblattgeometrien vor.

Nachfolgend wird die Erfindung anhand von Ausführungsbeispielen und Figurenskizzen genauer erläutert. In diesen ist im Einzelnen Folgendes dargestellt:
- Figur 1: zeigt eine erfindungsgemäße, tauchende Energieerzeugungsanlage mit einer Axialturbine in perspektivischer Darstellung, die für die Projektion in die Rotationsebene sichelförmig gestaltete Turbinenblätter umfasst.
- Figur 2: zeigt eine Draufsicht auf eine Axialturbine in die durch die Drehachsen vorgegebene Richtung, wobei die Axialturbine für eine Projektion in die Rotationsebene gesichelte Turbinenblätter aufweist.
- Figur 3: zeigt eine zur Figur 2 entsprechende Ansicht für eine Ausgestaltung mit einer geradlinigen, gegenüber der Radialrichtung geneigten Auffädellinie in der Rotationsebene.
- Figur 4: zeigt eine erfindungsgemäße, tauchende Energieerzeugungsanlage im Längsschnitt mit gesichelten Turbinenblättern für eine Axialturbine, wobei die Turbinenblätter zum äußeren Ende hin eine von der Stützstruktur wegweisende Krümmung aufweisen.
- Figur 5: zeigt eine Gestaltung für einen stromlinienförmigen Querschnitt der Stützstruktur für eine tauchende Energieerzeugungsanlage entsprechend des Schnitts A-A aus Figur 4.

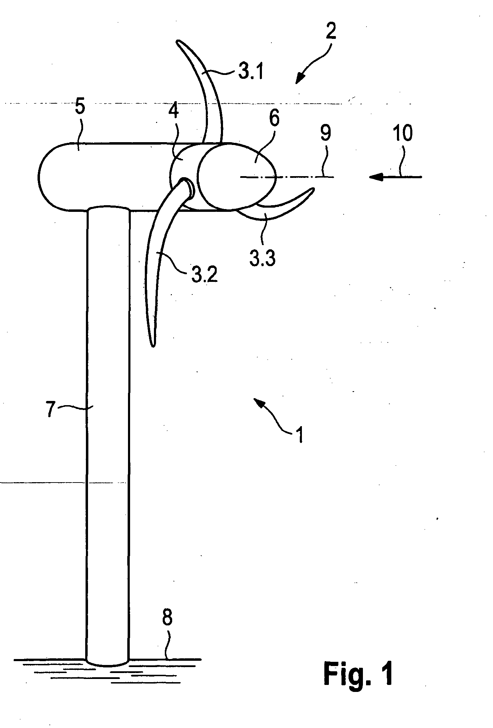

Figur 1 zeigt schematisch vereinfacht in perspektivischer Darstellung eine erfindungsgemäße, tauchende Energieerzeugungsanlage 1. Diese umfasst gattungsgemäß eine Wasserturbine, die als Axialturbine 2 gestaltet ist. Vorliegend wird eine Axialturbine 2 mit drei Turbinenblättern 3.1, 3.2, 3.3 verwendet, die entlang der Umfangsfläche einer Nabe 4 in einem Winkelabstand von 120° angeordnet sind. Die Axialturbine 2 läuft zusammen mit der Haube 6 am Gondelgehäuse ab. Typischerweise steht eine im Einzelnen nicht in Figur 1 ersichtliche Antriebswelle in drehstarrer Verbindung zur Axialturbine 2. Üblicherweise überträgt die Antriebswelle das antreibende Moment wenigstens mittelbar auf einen elektrischen Generator (nicht dargestellt).

Für die in Figur 1 gezeigte Ausgestaltung ist das Gondelgehäuse 5 an einer Stützstruktur 7 befestigt, die für die dargestellte Ausgestaltung als zylindrischer Turm auf dem Gewässergrund 8 fundamentiert ist. Für die vorliegende Anmeldung wird der Ausdruck Stützstruktur verallgemeinert verwendet und kann auch eine schwimmfähige Einheit bezeichnen, mit der die Axialturbine 2 wenigstens mittelbar verbunden ist.

Die Stützstruktur 7 stellt ein Strömungshindernis dar und baut für einen Luvläufer gemäß Figur 1 in stromaufwärtiger Richtung einen Turmvorstau auf. Bei jedem Durchgang der Turbinenblätter durch diesen Turmvorstau entsteht ein Druckpuls. Eine entsprechende Problematik liegt für einen Leeläufer vor, hier befindet sich die Stützstruktur gegenüber der Rotationsebene der Axialturbine 2 stromaufwärts, sodass ein Turmschatten entsteht. Dabei fällt im Turmschatten lokal die Anströmungsgeschwindigkeit oder die Strömung wird anderweitig durch die Stützstruktur 7 beeinflusst, im problematischen Fall entsteht eine instationäre Strömung in Form einer Wirbelstraße.

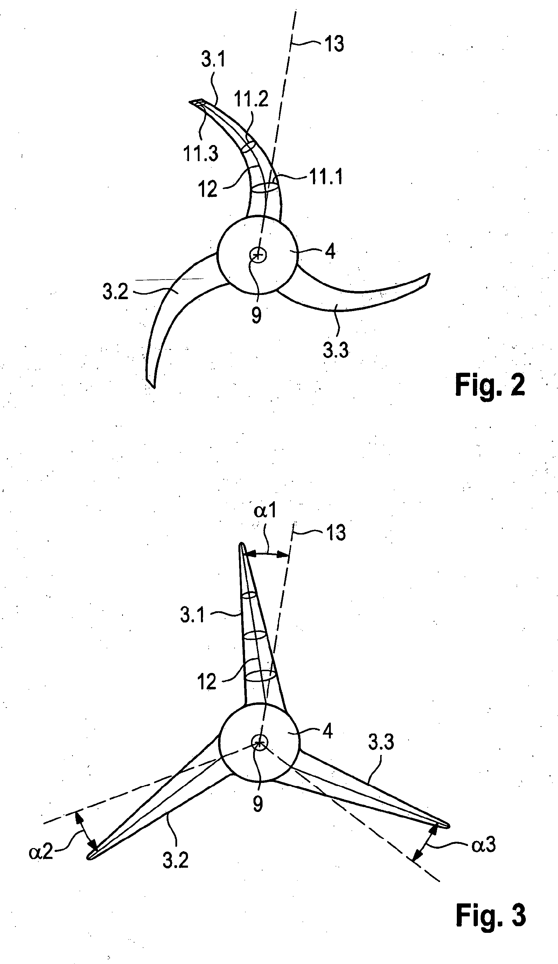

Die Turbinenblätter 3.1, 3.2, 3.3 für eine Axialturbine 2 einer erfindungsgemäßen, tauchenden Energieerzeugungsanlage 1 weichen entlang ihrer Längserstreckung bezüglich der Projektion in die Rotationsebene von der Radialrichtung ab. Dies ist für zwei beispielhafte Gestaltungen in den Figuren 2 und 3 dargestellt. Dabei wird der Radialstrahl 13 als die durch den Fußpunkt des jeweiligen Turbinenblatts führende Radiale zur Richtung der Drehachse 9 angesehen. Gemäß der in Figur 2 dargestellten Ausgestaltung weisen die Turbinenblätter 3.1, 3.2, 3.3 für die Projektion auf die Rotationsebene einen sichelförmigen Verlauf der Auffädellinie 12 auf.

Dabei kann die Auffädellinie 12 eine zusätzliche Richtungskomponente aufweisen, die in die Normalenrichtung zur Rotationsebene der Axialturbine 2 weist.

Im Rahmen der Erfindung können die Profilschnitte von beliebiger Form sein, insbesondere kommen hierbei die Profile der dreistelligen Göttinger Profilfamilie in Betracht, wobei der Profilverlauf der Turbinenblätter 3.1, 3.2, 3.3 als Tragflügelprofil ausgestaltet sein kann. Denkbar ist ferner, ein bidirektional anströmbares Profil, insbesondere ein punktsymmetrisches, zu verwenden. Darüber hinaus können die Turbinenblätter, respektive ihre Profilschnitte, eine vorbestimmte Winkelstellung zur Anströmungsrichtung 10 einnehmen. Des Weiteren ist es denkbar, die Turbinenblätter 3.1, 3.2, 3.3 drehstarr mit der Nabe verbunden auszubilden oder diesen einen Winkelverstellmechanismus (Pitch) zuzuordnen.

In Figur 3 ist eine Ausgestaltung der Erfindung gezeigt, für die der Verlauf einer Auffädellinie 12 der Turbinenblätter 3.1, 3.2, 3.3 im Gegensatz zur Ausgestaltung gemäß Figur 2 für die Projektion in die Rotationsebene nicht sichelförmig, sondern geradlinig angelegt ist. Allerdings weist der Verlauf der Auffädellinie 12 eine Winkelabweichung zur Radialrichtung auf, die in Figur 3 für die jeweiligen Turbinenblätter durch die Bezugszeichen α1, α2 und α3 verdeutlicht ist. Gemäß einer geräuschreduzierten Ausgestaltung weichen die Winkelabweichungen zum Radialstrahl α1, α2, α3 voneinander ab, sodass in Umfangsrichtung eine Symmetriebrechug angelegt ist.

Gemäß einer Weitergestaltung der Erfindung wird insbesondere der radial äußere Bereich der Turbinenblätter 3.1, 3.2, 3,3 so gestaltet, dass für den Fall entstehender Kavitationsblasen, diese über eine verringerte Fläche der Turbinenblätter geführt werden, um so das Schadenspotential zu begrenzen. Im Fall einer Strömung mit einer radialen Teilkomponenten gelingt dies durch ein Krümmen oder Abwirikeln der Hinterkante der Rotorblätter in Umlaufrichtung, d. h. die Auffädellinie läuft im radial äußeren Bereich dem Radialstrahl voraus.

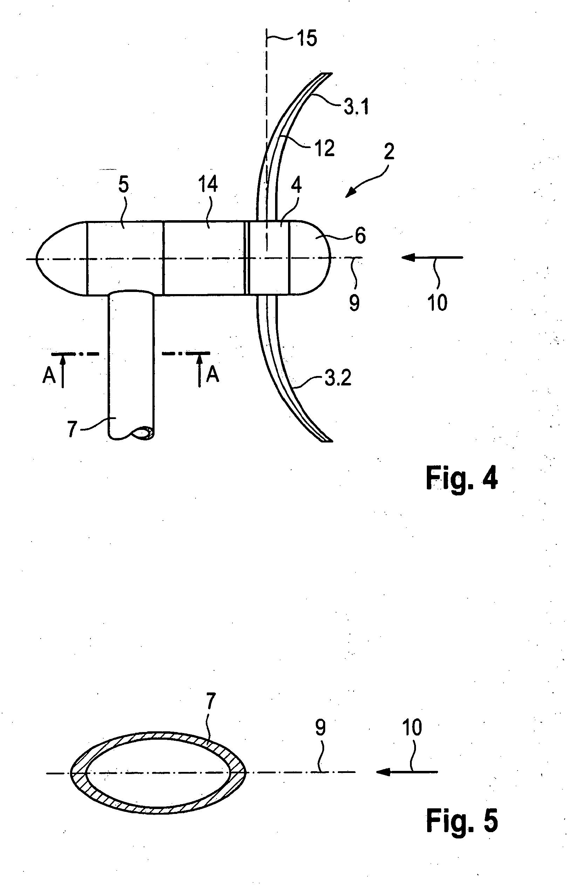

Die Abweichung des Verlaufs der Auffädellinie 12 gegenüber der Radialrichtung kann ein Turbinenblatt aus der Rotationsebene 15 der Axialturbine 2 herausführen. Ein Beispiel für eine solche Gestaltung ist im Längsschnitt durch eine erfindungsgemäße tauchende Energieerzeugungsanlage in Figur 4 dargestellt. Ersichtlich ist ein sichelförmiger Verlauf der Auffädellinie in einer Ebene, die durch die Radialrichtung 13 und die Drehachse 9 vorgegeben ist. Demnach springen die äußeren Enden der Turbinenblätter 3.1, 3.2 gegenüber der Rotationsebene vor oder zurück.

Für die in Figur 4 dargestellte vorteilhafte Ausgestaltung weisen für den skizzierten Leeläufer die Enden der Turbinenblätter 3.1, 3.2 stromaufwärts, sodass insbesondere die schnell umlaufenden Teile der Turbinenblätter 3.1, 3.2, nämlich die Turbinenblattspitzen, einen weiteren Abstand in Richtung der Drehachse der Axialturbine 2 von der Stützstruktur 7 aufweisen als die nabennahen Bereiche. Folglich durchqueren die Turbinenblätter 3.1, 3.2 entlang ihrer Längserstreckung zu einer vorbestimmten Zeit den Bereich des Turmvorstaus über einen gewissen axialen Abstand, wobei die Turbinenblattspitze in ein Gebiet geringerer Beeinflussung durch die Stützstruktur 7 eingreift. Hierdurch können die durch den Turmvorstau erzeugten Druckpulse weiter abgemildert werden.

Für eine weitere Gestaltung werden zusätzlich zur erfindungsgemäß gewählten geometrischen Gestaltung der Turbinenblätter 3.1, 3.2 der Axialturbine 2 zusätzliche Maßnahmen getroffen, die den Einfluss des Turmvorstaus beziehungsweise des Turmschattehs (nicht in Figur 4 dargestellt) verringern. Hierzu dient ein axiales Abstandselement 14, dass das Gondelgehäuse 5 in axialer Richtung verlängert und die Axialturbine 2 weiter von der Stützstruktur 7 beabstandet. Zusätzlich oder alternativ kann die Stützstruktur 7 strömungsgünstig gestaltet sein. Hierzu ist exemplarisch für einen Querschnitt entsprechend der Schnittlinie A-A in Figur 4, der in Figur 5 vergrößert dargestellt ist, eine strömungsgünstige Kontur gewählt. Gezeigt ist ein stromlinienförmig gewählter Querschnitt, der in einer parallel zur Drehachse 9 der Axialturbine 2 verlaufenden Richtung länglich gestreckt ist. Dabei kommen elliptische oder anderweitig abgeflachte Querschnitte in Frage, sodass die anstromseitige Nase des Querschnitts einen geringen Anströmungswiderstand bewirkt und der Strömungsaustauf abstromseitig möglichst gering gestört wird.

Weitere Modifikationen der Erfindung im Rahmen der nachfolgenden Schutzansprüche sind denkbar.

Durch die Sichelung über der gesamten Schaufel und mit einem Winkel von 38° an der Blattspitze können die Kippmomente um bis zu 20 % reduziert werden. Bei Leerläufern sind diese Momente 3 bis 4 mal größer als bei Leerläufern der Gezeitenströmungsturbinen. Daher ist eine Reduktion mittels Sichelung von großer Bedeutung.

Durch die hydrodynamische Strömung treten große Kräfte in Gezeitenströmungsanlagen auf. Diese lassen sich mittels der Sichelung reduzieren.

### Bezugszeichenliste

- 1: tauchende Energieerzeugungsanlage
- 2: Axialturbine
- 3.1, 3.2, 3.3: Turbinenblatt
- 4: Nabe
- 5: Gondelgehäuse
- 6: Haube Haube
- 7: Stützstruktur
- 8: Gewässergrund
- 9: Drehachse
- 10: Anströmungsrichtung
- 11.1, 11.2, 11.3: Profilschnitt
- 12: Auffädellinie
- 13: Radialstrahl
- α1, α2, α3: Winkelabweichung der Auffädellinie zum Radialstrahl in der Rotationsebene
- 14: axiales Abstandselement
- 15: Rotationsebene

## Patentansprüche

1. Tauchende Energieerzeugungsaniage (1) angetrieben durch eine Gezeitenströmung, umfassend
1.1 eine Wasserturbine in Form einer Axialturbine (2) mit Turbinenblättern (3.1, 3.2, 3.3) und einer zugeordneten Drehachse (9), wobei die Axialturbine (2) an einer als Turm ausgebildeten Stützstruktur (7) befestigt ist und der Axialturbine (2) eine Rotationsebene (15) zugeordnet ist, die durch die Drehachse (9) als Flächennormale und einen Fußpunkt eines Turbinenblatts (3.1, 3.2, 3.3) festgelegt Ist;
1.2 die Turbinenblätter (3.1, 3.2, 3.3) weisen ein Tragflügelprofil auf, wobei die Profilschnitte (11.1. 11.2, 11.3) entlang einer Auffädellinie (12) In Richtung nach radial außen mit einer kontinuierlich abnehmenden Profiltiefe ausgebildet sind; **dadurch gekennzeichnet, dass**
1.3 die Turbinenblätter (3.1, 3.2. 3.3), so gestaltet sind, dass der Verlauf der Auffädellinie (12) der jeweiligen Profilschnitte (11.1, 11.2, 11.3) projiziert auf die Rotationsebene (15) der Axialturbine (2) vom Radialstrahl (13) abweicht und projiziert auf eine zur Rotationsebene (15), senkrecht stehenden Ebene gekrümmt ist, sodass die Auffädellinie (12) eine von der Stützstruktur (7) wegweisende Richtungskomponente aufweist.

2. Tauchende Energieerzeugungsanlage (1) nach Anspruch 1, **dadurch gekennzeichnet, dass** die Turbinenblätter (3.1, 3.2, 3.3) bidirektional anströmbar sind.

3. Tauchende Energieerzeugungsanlage (1) nach einem der Ansprüche 1 oder 2, **dadurch gekennzeichnet, dass** die Projektion der Auffädellinie (12) auf die Rotationsebene (15) geradlinig verläuft und eine nicht verschwindende Winkelabwelchung (α1, α2, α3) zum Radialstrahl (13) einnimmt.

4. Tauchende Energieerzeugungsanlage (1) einem der Ansprüche 1 oder 2, **dadurch gekennzeichnet, dass** die Projektion der Auffädellinie (12) auf die Rotationsebene (15) einen gekrümmten Verlauf aufweist.

5. Tauchende Energieerzeugungsanlage (1) nach wenigstens einem der vorausgehenden Ansprüche, **dadurch gekennzeichnet, dass** der Bereich der größten Vor- oder Rücklage der Projektion der Auffädellinie (12) zum Radialstrahl eine minimale Winkelabwelchung von wenigstens 10° vom Radialstrahl aufweist.

6. Tauchende Energieerzeugungsanlage (1) nach wenigstens einem der vorausgehenden Ansprüche, **dadurch gekennzeichnet, dass** die Auffädellinie (12) In wenigstens einem Teilbereich eine zur Drehachse (9) verlaufende parallele Komponente aufweist.

7. Tauchende Energieerzeugungsanlage (1) nach wenigstens einem der vorausgehenden Ansprüche, ferner umfassend eine zur Drehachse (9) der Axialturbine asymmetrische Stützstruktur (7).

8. Tauchende Energieerzeugungsanlage (1) nach wenigstens einem der vorausgehenden Ansprüche, **dadurch gekennzeichnet, dass** zwischen der Stützstruktur (7) und der Wasserturbine ein axiales Abstandselement (14) vorgesehen ist, das die Wasserturbine von der Stützstruktur (7) in Richtung der Drehachse (9) beabstandet.

9. Tauchende Energieerzeugungsanlage (1) nach wenigstens einem der vorausgehenden Ansprüche, **dadurch gekennzeichnet, dass** die Stützstruktur (7) zur Reduzierung des Turmschattens und/oder des Turmvorstaus wenigstens In Teilbereichen stromlinienförmig ausgebildet ist.

## Claims

1. An immersible power generation plant (1), driven by a tidal current, comprising
1.1 a water turbine in the form of an axial turbine (2) with turbine blades (3.1, 3.2, 3.3) and an associated rotational axis (9), with the axial turbine (2) being fastened to a support structure (7) arranged as a tower and the axial turbine (2) is associated with a rotational plane (15) which is determined as a surface normal by the rotational axis (9) and a base point of a turbine blade (3.1, 3.2, 3.3);
1.2 the turbine blades (3.1, 3.2, 3.3) have an airfoil profile, with the profile sections (11.1, 11.2, 11.3) being arranged along a threading line (12) in the direction radially to the outside with a continuously decreasing profile depth;
**characterized in that**
1.3 the turbine blades (3.1, 3.2, 3.3) are arranged in such a way that the progression of the threading line (12) of the respective profile sections (11.1, 11.2, 11.3) projected onto the rotational plane (15) of the axial turbine (2) deviates from the radial beam (13) and is curved when projected onto a plane being perpendicular to the rotational plane (15), so that the threading line (12) has a directional component facing away from the support structure (7).

2. An immersible power generation plant (1) according to claim 1, **characterized in that** the flow against the turbine blades (3.1, 3.2, 3.3) can be bidirectional.

3. An immersible power generation plant (1) according to one of the claims 1 or 2, **characterized in that** the projection of the threading line (12) onto the rotational plane (15) extends in a straight line and assumes a non-disappearing angular deviation (a1, a2, a3) in relation to the radial beam (13).

4. An immersible power generation plant (1) according to one of the claims 1 or 2, **characterized in that** the projection of the threading line (12) to the rotational plane (15) has a curved progression.

5. An immersible power generation plant (1) according to at least one of the preceding claims, **characterized in that** the region of the largest forward position or rearward position of the projection of the threading line (12) in relation to the radial beam has a minimum angular deviation of at least 10° from the radial beam.

6. An immersible power generation plant (1) according to at least one of the preceding claims, **characterized in that** the threading line (12) has a component extending parallel to the rotational axis (9) in at least one partial section.

7. An immersible power generation plant (1) according to at least one of the preceding claims, further comprising a support structure (7) which is asymmetrical in relation to the rotational axis of the axial turbine.

8. An immersible power generation plant (1) according to at least one of the preceding claims, **characterized in that** an axial spacer element (14) is provided between the support structure (7) and the water turbine, which spacer element spaces the water turbine from the support structure (7) in the direction of the rotational axis (9).

9. An immersible power generation plant (1) according to at least one of the preceding claims, **characterized in that** the support structure (7) is arranged to be streamlined at least in partial sections in order to reduce the tower shadow and/or the water head in front of the tower.

## Revendications

1. Unité immergée de production d'énergie (1) entraînée par un courant de marée, comprenant
1.1 une turbine à eau sous forme de turbine (2) avec des pales de turbine (3.1, 3.2, 3.3) et un axe de rotation associé (9), où la turbine axiale (2) est fixée à une structure d'appui (7) en forme de tour et où un plan de rotation (15) est associé à la turbine axiale (2), plan défini par l'axe de rotation (9) comme normale à la surface et un point de pied d'une pale de turbine (3.1, 3.2, 3.3);
1.2 les pales de turbine (3.1, 3.2, 3.3) présentent un profil d'aile portante où les sections de profil (11.1. 11.2, 11.3) sont constituées le long d'une ligne d'empilage (12) dans une direction radiale vers l'extérieur avec une profondeur de profil réduisant de façon continue;
caractérisée en ce
1.3 les pales de turbine (3.1, 3.2. 3.3) sont conçues de telle sorte que le tracé de la ligne d'empilage (12) des sections de profil respectifs (11.1, 11.2, 11.3), projeté sur le plan de rotation (15) de la turbine axiale (2), s'écarte du faisceau radial (13) et se projette de manière courbe sur un plan perpendiculaire au plan de rotation (15) pour que la ligne d'empilage (12) présente une composante de direction s'écartant de la structure d'appui (7).

2. Unité immergée de production d'énergie (1) selon la revendication 1, **caractérisée en ce que** les pales de turbine (3.1, 3.2, 3.3) sont affluables dans les deux directions.

3. Unité immergée de production d'énergie (1) selon l'une des revendications 1 ou 2, **caractérisée en ce que** la projection de la ligne d'empilage (12) impacte le plan de rotation (15) de façon rectiligne et adopte un écart angulaire non nul (a1, a2, a3) par rapport au faisceau radial (13).

4. Unité immergée de production d'énergie (1) selon l'une des revendications 1 ou 2, **caractérisée en ce que** la projection de la ligne d'empilage (12) impacte le plan de rotation (15) selon un tracé courbe.

5. Unité immergée de production d'énergie (1) selon l'une quelconque au moins des revendications précédentes, **caractérisée en ce que** la zone des positions avant et arrière maximales de la projection de la ligne d'empilage (12) par rapport au faisceau radial présente un écart angulaire minimal d'au moins 10° par rapport au faisceau radial.

6. Unité immergée de production d'énergie (1) selon l'une quelconque au moins des revendications précédentes, **caractérisée en ce que** la ligne d'empilage (12) présente une composante parallèle à l'axe de rotation (9) dans au moins une zone partielle.

7. Unité immergée de production d'énergie (1) selon l'une quelconque au moins des revendications précédentes, comportant également une structure d'appui (7) asymétrique par rapport à l'axe de rotation (9) de la turbine axiale.

8. Unité immergée de production d'énergie (1) selon l'une quelconque au moins des revendications précédentes, **caractérisée en ce qu'**un élément d'écartement axial (14) est prévu entre la structure d'appui (7) et la turbine à eau, élément écartant la turbine à eau de la structure d'appui (7) dans le sens de l'axe de rotation (9).

9. Unité immergée de production d'énergie (1) selon l'une quelconque au moins des revendications précédentes, **caractérisée en ce que** la structure d'appui (7) est conçue en forme de ligne de courant pour réduire l'ombre de la tour et/ou les turbulences dues au passage des pales, au moins dans des zones partielles.
